# EUROPÄISCHE PATENTANMELDUNG

(11) **EP 1 908 906 A2**
(43) Veröffentlichungstag der Anmeldung: **09.04.2008**
(21) Anmeldenummer: 06020866.7
(22) Anmeldetag: 04.10.2006
(51) Int. Cl.: E05D 15/10

(54) **Vorrichtung zum Bewegen einer Fahrzeugschiebetür**

(71) Anmelder: Delphi Technologies, Inc., Troy, Michigan 48007 (US)
(72) Erfinder: Larisch, Markus, 46514 Schermbeck (DE); Bolte, Thomas M., 44797 Bochum (DE); Cholewinski, Bernhard, 40723 Hilden (DE)
(74) Vertreter: Manitz, Gerhart

(57) **Zusammenfassung**

Die Erfindung betrifft eine Vorrichtung zum Bewegen einer Schiebetür eines Fahrzeugs, wobei die Schiebetür mittels zweier Haltearme an einem Chassis des Fahrzeugs gehalten ist, die Haltearme zwischen einer Schließstellung und einer Öffnungsstellung um eine im Wesentlichen parallel zu einer Längsachse des Fahrzeugs verlaufende Schwenkachse relativ zum Chassis verschwenkbar sind und die Schiebetür in der Öffnungsstellung der Haltearme relativ zu diesen verschiebbar ist. Die Erfindung betrifft auch ein entsprechendes Verfahren zum Bewegen einer Schiebetür.

## Beschreibung

Die Erfindung betrifft eine Vorrichtung zum Bewegen einer Schiebetür eines Fahrzeugs, wobei die Schiebetür mittels zweier Haltearme mit einem Chassis des Fahrzeugs verbunden ist und die Haltearme zwischen einer Schließstellung und einer Öffnungsstellung um eine Schwenkachse relativ zum Chassis verschwenkbar sind.

Bei einer bekannten Vorrichtung dieser Art wird die Schiebetür zum Öffnen der Tür ausgehend von einer geschlossenen Stellung an ihrem einen Ende zunächst bezüglich des Chassis nach außen geschwenkt, indem die Haltearme um eine im Wesentlichen vertikal orientierte Schwenkachse verschwenkt werden. Anschließend wird die Schiebetür relativ zum Chassis verschoben, wobei die Schiebetür in Führungen geführt ist, die sich entlang einer Außenseite des Chassis erstrecken.

Der Erfindung liegt die Aufgabe zugrunde, eine alternative Vorrichtung zum Bewegen einer Schiebetür zu schaffen, welche sich insbesondere für eine Verwendung in kleineren Kraftfahrzeugen eignet.

Die Aufgabe wird durch eine Vorrichtung mit den Merkmalen des Anspruchs 1 und insbesondere dadurch gelöst, dass die Haltearme um eine im Wesentlichen parallel zu einer Längsachse des Fahrzeugs verlaufende Schwenkachse relativ zum Chassis verschwenkbar sind.

Die Verschwenkung der Haltearme um eine im Wesentlichen parallel zur Längsachse des Fahrzeugs verlaufende, d.h. also im Wesentlichen horizontal orientierte, Schwenkachse bedeutet letztlich ein Hoch- bzw. Herunterschwenken der Haltearme bezüglich des Chassis. Beim Hochschwenken der Haltearme wird die Schiebetür von dem Chassis wegbewegt und beim Herunterschwenken an das Chassis heranbewegt. Die erfindungsgemäße Ausrichtung der Schwenkachse bewirkt letztlich also, dass die Schiebetür während eines Abschnitts der Türöffnungsbewegung bezüglich des Chassis im Wesentlichen parallel nach außen, d.h. vom Chassis weg, versetzt wird.

In dieser nach außen versetzten Lage, d.h. bei in Öffnungsstellung befindlichen Haltearmen, ist die Schiebetür ausschließlich durch die Haltearme am Chassis gehalten. Dies bedeutet, dass die Schiebetür auch bei einer Verschiebung, z.B. quer zur Richtung der Versetzung und insbesondere in eine zumindest annähernd zur Längsachse des Fahrzeugs parallelen Richtung, ausschließlich an den Haltearmen geführt ist. Erfindungsgemäß wird also keine zusätzliche, sich entlang einer Außenseite des Chassis erstreckende Führung zur Führung der Schiebetür während der Verschiebebewegung benötigt.

Dadurch, dass die erfindungsgemäße Vorrichtung ohne eine an einer Außenseite des Chassis vorgesehene Führung auskommt, ist es der Vorrichtung bei geschlossener Tür nicht anzusehen, ob es sich um einen Schiebetürmechanismus oder um einen herkömmlichen Schwenktürmechanismus handelt. Darüber hinaus wird nicht nur eine größere Freiheit sowohl bei der technischen, als auch bei der optischen Gestaltung des Chassis bzw. des Fahrzeugs insgesamt erreicht, sondern die Vorrichtung eignet sich insbesondere auch zum Bewegen einer Fahrer- oder Beifahrertür eines kleineren Kraftfahrzeugs, z.B. eines Kleinwagens, bei dem die Abmessung eines hinter einer B-Säule gelegenen Fahrzeugabschnitts in Fahrzeuglängsrichtung gesehen kleiner als ein maximaler Verschiebeweg der Schiebetür ist.

Vorteilhafte Ausbildungen der erfindungsgemäßen Vorrichtung sind den Unteransprüchen, der Beschreibung und der Zeichnung zu entnehmen.

Gemäß einer bevorzugten Ausführungsform ist die Länge jedes Haltearmes so gewählt, dass eine Innenseite der Schiebetür bei in Öffnungsstellung befindlichen Haltearmen zu einer Außenseite des Chassis beabstandet ist. Durch das Verschwenken der Haltearme in die Öffnungsstellung wird die Schiebetür so weit von dem Chassis wegbewegt, d.h. bezüglich des Chassis nach außen versetzt, dass sie relativ zu den Haltearmen verschoben werden kann, ohne dabei mit dem Chassis in Kontakt zu geraten.

Die Haltearme können im Bereich einer B-Säule des Chassis eines Kraftfahrzeugs angeordnet sein, so dass sich eine z.B. als Fahrer- oder Beifahrertür ausgebildete Schiebetür durch Verschiebung in Richtung des Fahrzeughecks öffnen lässt. Um bei geschlossener Tür eine sichere Verriegelung der Schiebetür am Chassis zu erreichen, ist vorzugsweise in einem den Haltearmen in Längsrichtung des Fahrzeugs gesehen abgewandten Bereich der Schiebetür, z.B. im Bereich einer A-Säule des Fahrzeugs, ein Türschloss vorgesehen.

Gemäß einer weiteren Ausführungsform wirkt ein Schwenkantrieb zum Verschwenken der Haltearme chassisseitig mit wenigstens einem der Haltearme zusammen. Der Schwenkantrieb ermöglicht ein automatisches Öffnen bzw. Schließen der Schiebetür und kann beispielsweise einen Elektromotor umfassen. Sind die Haltearme im Bereich einer B-Säule eines Kraftfahrzeugchassis angeordnet, so kann der Antriebsmotor des Schwenkantriebs in der B-Säule untergebracht sein.

Alternativ oder zusätzlich kann ein Schwenkantrieb zum Verschwenken der Haltearme auch schiebetürseitig mit wenigstens einem der Haltearme zusammenwirken und zu diesem Zweck in der Schiebetür untergebracht sein.

Gemäß einer weiteren Ausführungsform ist ein Verschiebeantrieb zum Verschieben der Schiebetür in der Schiebetür untergebracht. Dabei kann ein Antriebsmotor des Verschiebeantriebs, gegebenenfalls über ein Gelenk, mit wenigstens einem der Haltearme fest verbunden sein. Alternativ oder zusätzlich ist es auch möglich, einen Antriebsmotor des Verschiebeantriebs fest an der Schiebetür anzubringen. Der Verschiebeantrieb kann in an sich bekannter Weise einen Zahnstangenmechanismus, einen Zahnriemenmechanismus, einen Seilzugmechanismus oder einen Kettenmechanismus aufweisen.

Vorteilhafterweise umfassen bzw. umfasst der Schwenkantrieb und/oder der Verschiebeantrieb jeweils eine Kupplung, durch die ein jeweiliger Antriebsmotor des Schwenk- bzw. Verschiebeantriebs von dem ihm jeweils zugeordneten Haltearm entkoppelbar ist. Die Kupplung ermöglicht es, z.B. bei einem Stromausfall, die Schiebetür manuell zu öffnen oder zu schließen, ohne dabei gegen den inneren Widerstand des Antriebsmotors bzw. der Antriebsmotoren arbeiten zu müssen.

Umfasst der Verschiebeantrieb einen Zahnstangenmechanismus, so kann die Kupplung beispielsweise durch wenigstens ein zwischen eine Zahnstange und ein Antriebszahnrad des Antriebsmotors geschaltetes Kupplungszahnrad gebildet sein, welches derart um das Antriebszahnrad herum beweglich gelagert ist, dass es je nach Drehrichtung des Antriebszahnrads mit der Zahnstange in oder außer Eingriff bringbar ist.

Vorzugsweise ist ein Mittel zur Unterstützung einer motorgetriebenen oder manuellen Verschwenkung der Haltearme aus der Schließstellung in die Öffnungsstellung vorgesehen. Durch dieses Unterstützungsmittel ist der zum mit der Verschwenkung der Haltearme aus der Schließstellung in die Öffnungsstellung einhergehenden Anheben der Schiebetür erforderliche Kraftaufwand reduzierbar, so dass nicht nur das manuelle Öffnen der Schiebetür erleichtert ist, sondern auch ein Antriebsmotor mit einer geringeren Leistung für den Schwenkantrieb verwendet werden kann.

Um zu verhindern, dass sich die Schiebetür bei nicht vollständig hoch geschwenkten Haltearmen verschieben lässt, kann ein Verriegelungsmechanismus vorgesehen sein, welcher eine Verschiebung der Schiebetür erst dann ermöglicht, wenn sich die Haltearme in ihrer Öffnungsstellung befinden. Entsprechend kann ein Verriegelungsmechanismus vorgesehen sein, welcher eine Verschwenkung der Haltearme nur dann zulässt, wenn sich die Schiebetür in ihrer zum Anheben bzw. Absenken vorgesehenen Verschiebeendlage befindet. Beide Verriegelungsmechanismen tragen dazu bei, eine Beschädigung des Chassis durch die Schiebetür bzw. umgekehrt zu vermeiden.

Gemäß einer weiteren Ausführungsform bildet mindestens einer der Haltearme einen Abschnitt einer Leitung zum Versorgen wenigstens einer in der Schiebetür vorgesehenen elektrischen Komponente mit elektrischer Energie. Bei der in der Schiebetür untergebrachten und mit elektrischer Energie zu versorgenden elektrischen Komponente kann es sich beispielsweise um einen Antriebsmotor des Verschiebeantriebs, einen Sensor, einen Airbag, einen Antriebsmotor eines automatischen Fensterhebermechanismus oder um eine Beleuchtung handeln. Durch die Nutzung wenigstens eines Haltearms und insbesondere beider Haltearme als Stromleiter ist die Stromversorgung der in der Schiebetür untergebrachten elektrischen Komponenten erheblich vereinfacht, da die Verlegung eines oder mehrerer Stromkabel vom Chassis in die Schiebetür umgangen wird.

Vorteilhafterweise ist ein flexibles Leitungsstück, z.B. ein Flachleiter im Bereich eines Gelenks zur Verbindung eines Haltearms mit dem Chassis und/oder im Bereich eines Gelenks zur Verbindung eines Haltearms mit der Schiebetür vorgesehen, um das Gelenk elektrisch zu überbrücken. Durch die Bewegung der Gelenkabschnitte gegeneinander kann die Leitung eines elektrischen Stroms über das Gelenk beeinträchtigt werden. Diese Problematik wird durch die Überbrückung des Gelenks bzw. der Gelenke durch ein entsprechendes flexibles Leitungsstück umgangen, so dass eine zuverlässige Stromversorgung der in der Schiebetür angeordneten elektrischen Komponenten dauerhaft sichergestellt ist.

Besonders bevorzugt ist es, wenn der eine Haltearm einen Leitungsabschnitt zum Übertragen einer, insbesondere mit Steuersignalen beaufschlagten, elektrischen Versorgungsspannung und der andere Haltearm einen Masse-Leitungsabschnitt bildet. Über den einen Haltearm wird der Strom also gewissermaßen zu einer in der Schiebetür untergebrachten elektrischen Komponente hingeführt und über den anderen Haltearm wieder zurückgeführt. Die Beaufschlagung der Versorgungsspannung mit Steuersignalen, z.B. durch eine entsprechende Modulation der Spannung, ermöglicht die Stromversorgung und gleichzeitige gezielte Ansteuerung einer oder mehrerer elektrischer Komponenten über eine gemeinsame Leitung, d.h. über einen Haltearm. Das Konzept der Stromversorgung und Übertragung von Steuersignalen über ein und dieselbe Leitung ist auch unter dem Begriff der "Powerline Communication" bekannt.

Um die über den einen Haltearm empfangene Versorgungsspannung, gegebenenfalls gemäß einem zusammen mit Versorgungsspannung empfangenen Steuersignal, einer jeweils anzusteuernden elektrischen Komponente zuzuführen, kann in der Schiebetür eine mit dem einen Haltearm elektrisch verbundene Verteileranordnung vorgesehen sein.

Weiterer Gegenstand der Erfindung ist ein Verfahren zum Bewegen einer Schiebetür eines Fahrzeugs, bei dem eine mittels zweier Haltearme mit einem Chassis des Fahrzeugs verbundene Schiebetür durch eine Verschwenkung der Haltearme um eine im Wesentlichen parallel zu einer Längsachse des Fahrzeugs verlaufende Schwenkachse ausgehend von einer geschlossenen Stellung zum Öffnen vom Chassis weg im Wesentlichen parallel versetzt wird und anschließend relativ zu den Haltearmen verschoben wird. Das Schließen erfolgt auf umgekehrte Weise, d.h. durch ein entsprechendes Verschieben der Tür relativ zu den Haltearmen und anschließendes Versetzen der Schiebetür in Richtung des Chassis.

Durch das erfindungsgemäße Verfahren lassen sich die im Zusammenhang mit der erfindungsgemäßen Vorrichtung bereits erläuterten Vorteile entsprechend erreichen.

Weiterer Gegenstand der Erfindung ist außerdem eine Vorrichtung zum Versorgen wenigstens einer in einer Schiebetür eines Fahrzeugs angeordneten elektrischen Komponente mit elektrischer Energie, wobei die Schiebetür mittels zweier Haltearme mit einem Chassis des Fahrzeugs verbunden ist und der eine Haltearm einen Leitungsabschnitt zum Übertragen einer, insbesondere mit Steuersignalen beaufschlagten, elektrischen Versorgungsspannung und der andere Haltearm einen Masse-Leitungsabschnitt bildet.

Wie voranstehend bereits erläutert wurde, erleichtert die Nutzung der Haltearme als Stromleiter die Stromversorgung von in der Schiebetür angeordneten elektrischen Komponenten, indem sie den Verkabelungsaufwand reduziert. Dies gilt umso mehr, wenn durch eine entsprechende Modulation der Versorgungsspannung zusätzlich zu der Versorgungsspannung auch Steuersignale zur Ansteuerung der elektrischen Komponenten über die Haltearme übertragen werden. Wie ebenfalls bereits erwähnt wurde, kann es sich bei den elektrischen Komponenten um einen Antriebsmotor eines Verschiebeantriebs für die Schiebetür, einen Sensor, einen Airbag, einen Antriebsmotor einer automatischen Fensterhebervorrichtung oder eine Beleuchtung handeln.

Vorteilhafterweise ist eine mit einem Haltearm elektrisch verbundene Verteileranordnung in der Schiebetür vorgesehen, um die über den Haltearm empfangene Versorgungsspannung, gegebenenfalls gemäß einem zusammen mit der Versorgungsspannung empfangenen Steuersignal, einer anzusteuernden elektrischen Komponente zuzuführen.

Nachfolgend wird die Erfindung rein beispielhaft anhand einer vorteilhaften Ausführungsform unter Bezugnahme auf die beigefügte Zeichnung beschrieben. Es zeigen:
- Fig. 1 bis 4: eine erfindungsgemäße Vorrichtung zum Bewegen einer Schiebetür eines Kraftfahrzeugs in verschiedenen Schließ- bzw. Öffnungszuständen der Schiebetür, ausgehend von einer vollständig geschlossenen Tür (Fig. 1) bis zu einer vollständig geöffneten Tür (Fig. 4); und
- Fig. 5 bis 7: eine zwischen einem Antriebsmotor und einer Zahnstange eines Verschiebeantriebs der Schiebetür von Fig. 1 geschaltete Kupplung im eingekuppelten Zustand (Fig. 5 und 6) und im ausgekuppelten Zustand (Fig. 7).

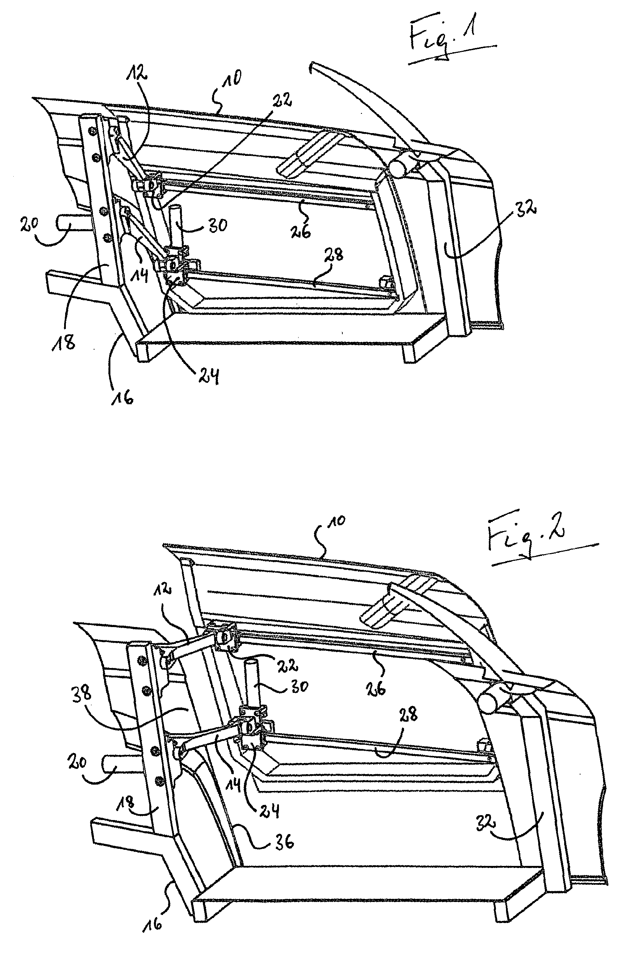

Fig. 1 zeigt eine erfindungsgemäße Vorrichtung zum Bewegen einer Schiebetür 10, die mittels zweier im Wesentlichen parallel zueinander verlaufenden Haltearme 12, 14 mit einem Chassis 16 eines Kraftfahrzeugs verbunden ist. Die Haltearme 12 sind jeweils gelenkig und zueinander beabstandet übereinander an einer B-Säule 18 des Chassis 16 angebracht und um eine Schwenkachse bezüglich des Chassis 16 verschwenkbar, die im Wesentlichen parallel zu einer Längsachse des Fahrzeugs verläuft, d.h. also im Wesentlichen horizontal orientiert ist. Zur automatischen Verschwenkung der Haltearme 12, 14 ist ein mit dem unteren Haltearm 14 zusammenwirkender Schwenkantrieb vorgesehen, welcher einen an der B-Säule 18 angebrachten elektrischen Antriebsmotor 20 umfasst.

Jeder Haltearm 12, 14 ist an seinem schiebetürseitigen Ende mit einem in der Schiebetür 10 angeordneten Schlitten 22, 24 gelenkig verbunden. Die Schlitten 22, 24 sind jeweils an einer sich in Verschieberichtung der Tür 10 erstreckenden Führung 26, 28 verschiebbar gelagert.

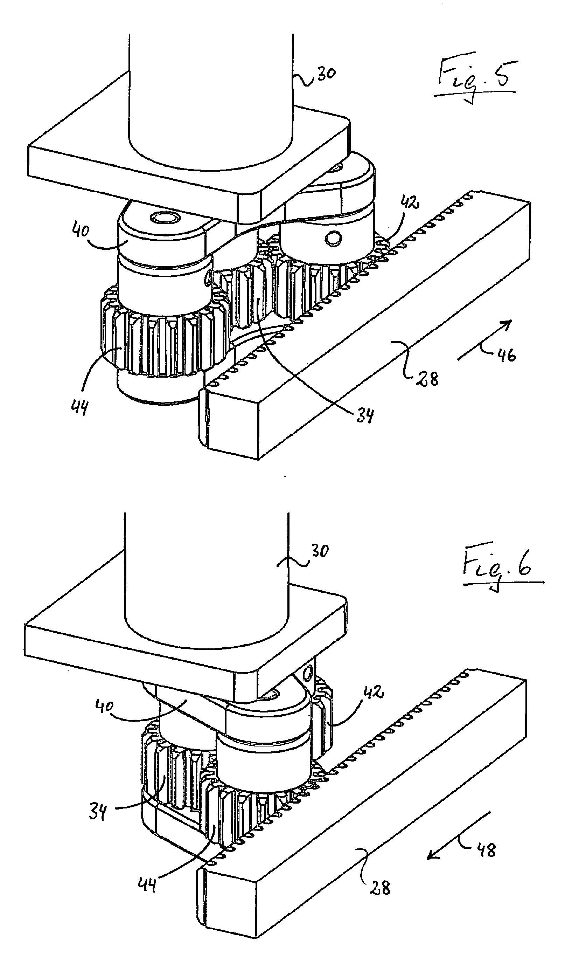

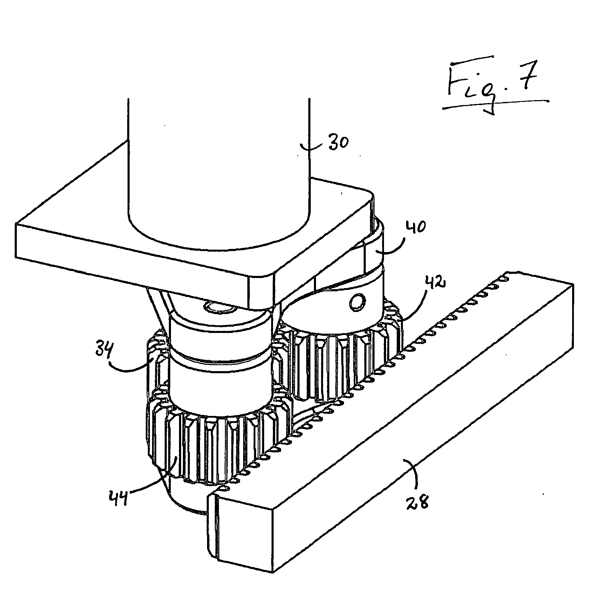

Die Führung 28, die zur Führung des mit dem unteren Haltearm 14 verbundenen Schlittens 24 vorgesehen ist, ist als Zahnstange ausgebildet und Teil eines Verschiebeantriebs zur automatischen Verschiebung der Schiebetür 10. Der Verschiebeantrieb umfasst außerdem einen elektrischen Antriebsmotor 30, welcher über einen Kupplungsmechanismus, der im Zusammenhang mit Fig. 5 bis 7 näher erläutert wird, mit der Zahnstange 28 in Eingriff bringbar ist. Der Antriebsmotor 30 ist über den unteren Schlitten 24 an dem unteren Haltearm 14 befestigt. Sobald der Antriebsmotor 30 über den Kupplungsmechanismus mit der Zahnstange 28 in Eingriff steht, bewirkt eine Betätigung des Antriebsmotors 30 eine Verschiebung der Schiebetür 10 relativ zu den Haltearmen 12, 14 und somit relativ zum Chassis 16.

Zur Verringerung des Verkabelungsaufwands erfolgt die Energieversorgung sowie die Ansteuerung des Antriebsmotors 30 des Verschiebeantriebs und gegebenenfalls weiterer, in der Schiebetür 10 untergebrachter elektrischer Komponenten, wie z.B. eines Sensors, einer Beleuchtung, eines Airbags oder eines elektrischen Fensterhebers, im Wege einer sogenannten "Powerline Communication" über die Haltearme 12, 14.

Bei der dargestellten Ausführungsform bildet der untere Haltearm 14 einen Leitungsabschnitt zum Übertragen einer mit Steuersignalen modulierten elektrischen Versorgungsspannung und der obere Haltearm 12 einen Masse-Leitungsabschnitt. An dem unteren Schlitten 24 ist ferner eine Verteileranordnung (nicht gezeigt) angebracht, die mit dem unteren Haltearm 14 elektrisch verbunden ist, um die über den unteren Haltearm 14 empfangene Versorgungsspannung gemäß den zusammen mit der Versorgungsspannung empfangenen Steuersignalen den einzelnen anzusteuernden elektrischen Komponenten zuzuführen. Grundsätzlich kann die Übertragung der Versorgungsspannung und der Steuersignale auch über den oberen Haltearm 12 und die Befestigung der Verteileranordnung an dem oberen Schlitten 22 erfolgen.

Des Weiteren können die Gelenke, über welche die Haltearme 12, 14 mit den Schlitten 22, 24 verbunden sind sowie die Gelenke, über welche die Haltearme 12, 14 mit der B-Säule 18 des Chassis 16 verbunden sind, jeweils durch ein flexibles Leitungsstück (nicht gezeigt), z.B. einen Flachleiter, überbrückt sein, um einen zuverlässigen Stromfluss über die Gelenke dauerhaft sicherzustellen.

Fig. 1 zeigt die Schiebetür 10 in einem geschlossenen Zustand. In diesem Zustand kann die Schiebetür 10 mittels eines im Bereich einer A-Säule 32 des Chassis 16 angeordneten Türschlosses (nicht gezeigt) an dem Chassis verriegelt sein. Die Haltearme 12, 14 befinden sich bei geschlossener Tür in einer Schließstellung, in welcher sie schräg nach unten weisen.

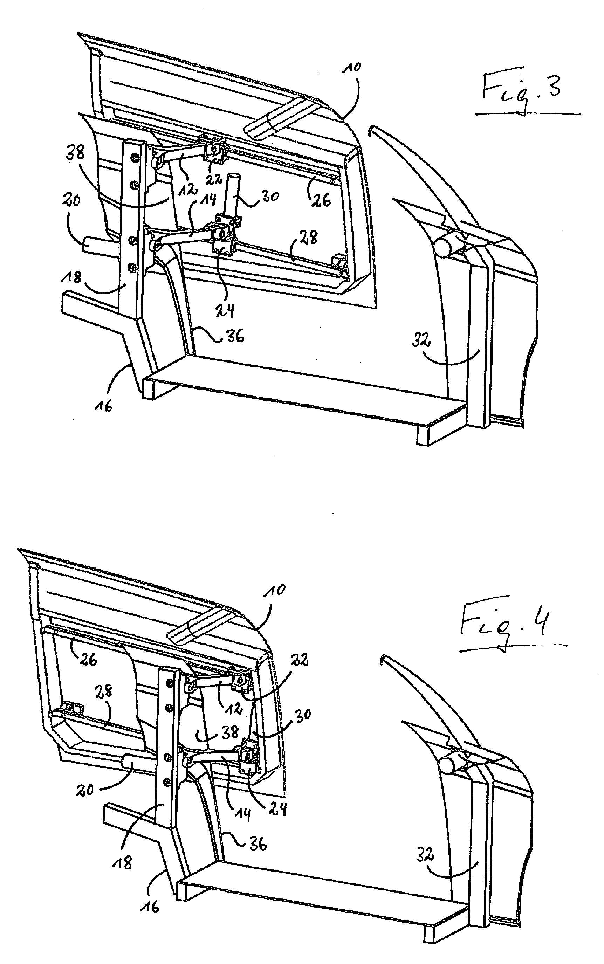

Zum Öffnen der Schiebetür 10 wird zunächst der Antriebsmotor 20 des Schwenkantriebs betätigt, um die Haltearme 12, 14 aus ihrer Schließstellung nach oben zu schwenken, bis sie eine Öffnungsstellung erreichen, in welcher sie im Wesentlichen horizontal orientiert sind (Fig. 2). Durch das Hochschwenken der Haltearme 12, 14 wird die Schiebetür 10 im Wesentlichen parallel vom Chassis 16 weg, d.h. nach außen, versetzt und gleichzeitig angehoben. Die Länge der Haltearme 12, 14 ist so bemessen, dass die Schiebetür 10 bei in Öffnungsstellung befindlichen Haltearmen 12, 14 so weit von dem Chassis 16 beabstandet ist, dass die Schiebetür 10 relativ zum Chassis 16 verschoben werden kann, ohne mit diesem in Kontakt zu geraten.

Ein nicht gezeigter Verriegelungsmechanismus sorgt dafür, dass die Schiebetür 10 nur dann verschoben werden kann, wenn sich die Haltearme 12, 14 in ihrer Öffnungsstellung befinden, d.h. also ganz hoch geschwenkt sind. Die Verschiebung der Schiebetür 10 wird durch eine entsprechende Aktivierung des Antriebsmotors 30 des Verschiebeantriebs erreicht. Durch die Aktivierung des Antriebsmotors 30 wird ein mit dem Antriebsmotor 30 verbundenes Antriebszahnrad 34 über den noch zu erläuternden Kupplungsmechanismus mit der Zahnstange 28 in Eingriff gebracht und diese zusammen mit der Schiebetür 10 in Richtung des Fahrzeughecks bewegt (Fig. 3), bis die Schiebetür 10 ihren vollständig geöffneten Zustand erreicht (Fig. 4).

Das Schließen der Schiebetür 10 erfolgt in umgekehrter Weise, d.h. die Schiebetür 10 wird zunächst nach vorne, d.h. also in Richtung der A-Säule 32, verschoben und anschließend durch ein Herunterschwenken der Haltearme 12, 14 an das Chassis 16 herangezogen. Durch einen weiteren nicht gezeigten Verriegelungsmechanismus ist sichergestellt, dass sich die Haltearme 12, 14 nur dann herunter schwenken lassen, wenn sich die Schiebetür 10 in ihrer dafür vorgesehenen Verschiebeendlage, bei dem dargestellten Ausführungsbeispiel also in ihrer vorderen Endlage, befindet.

Wie Fig. 1 bis 4 zu entnehmen ist, ist die B-Säule 18 bezüglich des hinteren Randes 36 des Türausschnitts etwas nach hinten versetzt. Damit die Haltearme 12, 14 aus ihrer Schließstellung (Fig. 1) in ihre Öffnungsstellung (Fig. 2) hochgeschwenkt werden können, ohne dabei an den den hinteren Rand 36 des Türausschnitts begrenzenden Karosserieabschnitt 38 anzustoßen, erstrecken sich die Haltearme 12, 14 in ihrer Schließstellung nicht parallel zur B-Säule 18, sondern sie sind um einen Winkel nach vorne, d.h. in Richtung der A-Säule 32 abgewinkelt. Dabei ist der Winkel gewählt, dass sich die Haltearme 12, 14 in ihrer Öffnungsstellung (Fig. 2) an dem Karosserieabschnitt 38 vorbei durch den Türausschnitt aus dem Inneren des Kraftfahrzeugs nach außen erstrecken können.

Im Bereich der B-Säule 18 ist außerdem ein nicht gezeigtes Mittel zur Unterstützung der Schwenkbewegung der Haltearme 12, 14 aus der Schließstellung in die Öffnungsstellung vorgesehen, welches in Form einer Feder oder eines Gasdruckdämpfers ausgebildet sein kann und welches nicht nur ein manuelles Öffnen der Schiebetür 10, sondern auch die Verwendung eines Schwenkantriebsmotors 20 mit einer geringeren Leistung ermöglicht.

Anhand von Fig. 5 bis 7 wird nun der bereits erwähnte Kupplungsmechanismus erläutert, welcher zwischen den Antriebsmotor 30 und die Zahnstange 28 des Verschiebeantriebs geschaltet ist.

Der Kupplungsmechanismus umfasst das Antriebszahnrad 34, welches drehfest auf einer von dem Antriebsmotor 30 angetriebenen Welle sitzt. Auf der Antriebswelle ist ferner eine Trägerplatte 40 verdrehbar gelagert, an der zwei Kupplungszahnräder 42, 44 verdrehbar angebracht sind. Die Drehachsen der Kupplungszahnräder 42, 44 verlaufen parallel zu der Antriebswelle des Antriebsmotors 30. Ferner sind die Kupplungszahnräder 42, 44 so zueinander beabstandet angeordnet, dass sie stets beide mit dem Antriebszahnrad 34 in Eingriff stehen und jeweils einzeln mit der Zahnstange 28 in Eingriff gebracht werden können.

Mit anderen Worten können die folgenden drei Konstellationen auftreten: das erste Kupplungszahnrad 42 steht mit dem Antriebszahnrad 34 und mit der Zahnstange 28 in Eingriff (Fig. 5); das zweite Kupplungszahnrad 44 steht mit dem Antriebszahnrad 34 und mit der Zahnstange 28 in Eingriff (Fig. 6); und beide Kupplungszahnräder 42, 44 stehen mit dem Antriebszahnrad 34 in Eingriff, mit der Zahnstange 24 aber außer Eingriff (Fig. 7).

Der Kupplungsmechanismus funktioniert folgendermaßen. Wird der Antriebsmotor 30 zur Verschiebung der Schiebetür 10 in einer ersten Drehrichtung aktiviert, so wird das Antriebszahnrad 34 in einer entsprechenden ersten Richtung gedreht. Diese Verdrehung des Antriebszahnrads 34, beispielsweise im Uhrzeigersinn in Fig. 5, bewirkt eine entsprechende Verdrehung der Trägerplatte 40, im Uhrzeigersinn in Fig. 5, wodurch das Kupplungszahnrad 42 mit der Zahnstange 28 in Eingriff gebracht wird, um die Zahnstange 28 in einer Richtung 46 an dem Antriebsmotor 30 vorbei zu bewegen.

Zur Umkehrung der Verschieberichtung der Schiebetür 10 wird die Drehrichtung des Antriebsmotors 30 umgekehrt, so dass sich das Antriebsrad 34 in die entgegengesetzte Richtung dreht, in Fig. 6 entgegen dem Uhrzeigersinn. Diese Umkehrung der Drehrichtung des Antriebszahnrads 34 bewirkt eine entsprechende Verdrehung der Trägerplatte 40, entgegen dem Uhrzeigersinn in Fig. 6, wodurch das erste Kupplungszahnrad 42 mit der Zahnstange 28 außer Eingriff gebracht wird und stattdessen das zweite Kupplungszahnrad 44 mit der Zahnstange 28 in Eingriff gebracht wird, um die Zahnstange 28 in einer entgegengesetzten Richtung 48 an dem Antriebsmotor 30 vorbei zu bewegen.

Soll die Schiebetür 10 manuell verschoben werden, ohne dabei den Antriebsmotor 30 mitzudrehen, so braucht die Schiebetür 10 lediglich so weit in die eine oder andere Richtung verschoben zu werden, dass das jeweils zuletzt mit der Zahnstange 28 in Eingriff gebrachte Kupplungszahnrad 42, 44 und dadurch letztlich beide Kupplungszahnräder 42, 44 gleichzeitig mit der Zahnstange 28 außer Eingriff gebracht werden.

Steht, wie in Fig. 5 gezeigt ist, beispielsweise das erste Kupplungszahnrad 42 mit der Zahnstange 28 in Eingriff, so bewirkt eine Verschiebung der Zahnstange 28 in der durch den Pfeil 46 angedeuteten Richtung eine Bewegung ersten Kupplungszahnrades 42 entgegen dem Uhrzeigersinn um das stillstehende Antriebszahnrad 34 herum, wodurch das erste Kupplungszahnrad 42 und die Zahnstange 28 außer Eingriff gebracht werden.

Steht hingegen das zweite Kupplungszahnrad 44 mit der Zahnstange 28 in Eingriff, wie in Fig. 6 gezeigt ist, so lässt sich das zweite Kupplungszahnrad 44 durch eine Verschiebung der Zahnstange in der durch den Pfeil 48 angedeuteten Richtung mit der Zahnstange 28 außer Eingriff bringen.

Sobald beide Kupplungszahnräder 42, 44 mit der Zahnstange 28 außer Eingriff stehen, lässt sich die Zahnstange 28 und somit die Schiebetür 10 insgesamt bezüglich des Antriebsmotors 30 frei verschieben. Im Ergebnis ermöglicht der Kupplungsmechanismus somit also eine manuelle Verschiebung der Verschiebetür 10 mit einem vergleichsweise geringen Kraftaufwand.

An dieser Stelle sei darauf hingewiesen, dass auch der Schwenkantrieb einen derartigen oder ähnlichen Kupplungsmechanismus aufweisen kann, um ein manuelles Verschwenken der Haltearme 12, 14, d.h. also Bewegen der Schiebetür 10 von dem Chassis 10 weg oder auf das Chassis 16 zu, zu erleichtern.

### Bezugszeichenliste

- 10: Schiebetür
- 12: Haltearm
- 14: Haltearm
- 16: Chassis
- 18: B-Säule
- 20: Antriebsmotor
- 22: Schlitten
- 24: Schlitten
- 26: Führung
- 28: Führung/Zahnstange
- 30: Antriebsmotor
- 32: A-Säule
- 34: Antriebszahnrad
- 36: hinterer Rand
- 38: Karosserieabschnitt
- 40: Trägerplatte
- 42: Kupplungszahnrad
- 44: Kupplungszahnrad
- 46: Richtung
- 48: Richtung

## Patentansprüche

1. Vorrichtung zum Bewegen einer Schiebetür (10) eines Fahrzeugs, wobei die Schiebetür (10) mittels zweier Haltearme (12, 14) an einem Chassis (16) des Fahrzeugs gehalten ist, die Haltearme (12, 14) zwischen einer Schließstellung und einer Öffnungsstellung um eine im wesentlichen parallel zu einer Längsachse des Fahrzeugs verlaufende Schwenkachse relativ zum Chassis (16) verschwenkbar sind und die Schiebetür (10) bei in Öffnungsstellung befindlichen Haltearmen (12, 14) relativ zu diesen verschiebbar ist.

2. Vorrichtung nach Anspruch 1,
**dadurch gekennzeichnet, dass**
die Länge jedes Haltearmes (12, 14) so gewählt ist, dass eine Innenseite der Schiebetür (10) bei in Öffnungsstellung befindlichen Haltearmen (12, 14) zu einer Außenseite des Chassis (16) beabstandet ist.

3. Vorrichtung nach Anspruch 1 oder 2,
**dadurch gekennzeichnet, dass**
ein Schwenkantrieb zum Verschwenken der Haltearme (12, 14) chassisseitig mit wenigstens einem der Haltearme (14) zusammenwirkt.

4. Vorrichtung nach zumindest einem der vorstehenden Ansprüche,
**dadurch gekennzeichnet, dass**
ein Schwenkantrieb zum Verschwenken der Haltearme (12, 14) schiebetürseitig mit wenigstens einem der Haltearme zusammenwirkt.

5. Vorrichtung nach zumindest einem der vorstehenden Ansprüche,
**dadurch gekennzeichnet, dass**
ein Verschiebeantrieb zum Verschieben der Schiebetür (10) in der Schiebetür (10) untergebracht ist.

6. Vorrichtung nach Anspruch 5,
**dadurch gekennzeichnet, dass**
ein Antriebsmotor (30) des Verschiebeantriebs, gegebenenfalls über ein Gelenk, mit wenigstens einem der Haltearme (12, 14) fest verbunden ist.

7. Vorrichtung nach Anspruch 5 oder 6,
**dadurch gekennzeichnet, dass**
ein Antriebsmotor (30) des Verschiebeantriebs an der Schiebetür (10) fest angebracht ist.

8. Vorrichtung nach zumindest einem der Ansprüche 3 bis 7,
**dadurch gekennzeichnet, dass**
der Schwenkantrieb und/oder der Verschiebeantrieb jeweils eine Kupplung (34, 42-40) umfasst, durch die ein jeweiliger Antriebsmotor (30) von dem ihm zugeordneten Haltearm entkoppelbar ist.

9. Vorrichtung nach zumindest einem der vorstehenden Ansprüche,
**dadurch gekennzeichnet, dass**
ein Mittel zur Unterstützung einer motorgetriebenen oder manuellen Verschwenkung der Haltearme (12, 14) aus der Schließstellung in die Öffnungsstellung vorgesehen ist

10. Vorrichtung nach zumindest einem der vorstehenden Ansprüche,
**dadurch gekennzeichnet, dass**
mindestens einer der Haltearme (12, 14) einen Abschnitt einer Leitung zum Versorgen wenigstens einer in der Schiebetür (10) vorgesehenen elektrischen Komponente (30) mit elektrischer Energie bildet.

11. Vorrichtung nach zumindest einem der vorstehenden Ansprüche,
**dadurch gekennzeichnet, dass**
ein flexibles Leitungsstück, z.B. ein Flachleiter, im Bereich eines Gelenks zur Verbindung eines Haltearms (12, 14) mit dem Chassis (16) und/oder im Bereich eines Gelenks zur Verbindung eines Haltearms (12, 14) mit der Schiebetür (10) vorgesehen ist, um das Gelenk elektrisch zu überbrücken.

12. Vorrichtung nach zumindest einem der vorstehenden Ansprüche,
**dadurch gekennzeichnet, dass**
der eine Haltearm (14, 12) einen Leitungsabschnitt zum Übertragen einer, insbesondere mit Steuersignalen beaufschlagten, elektrischen Versorgungsspannung und der andere Haltearm (12, 14) einen Masse-Leitungsabschnitt bildet.

13. Verfahren zum Bewegen einer Schiebetür (10) eines Fahrzeugs, bei dem eine mittels zweier Haltearme (12, 14) an einem Chassis (16) des Fahrzeugs gehaltene Schiebetür (10) durch eine Verschwenkung der Haltearme (12, 14) um eine im Wesentlichen parallel zu einer Längsachse des Fahrzeugs verlaufende Schwenkachse ausgehend von einer geschlossenen Stellung zum Öffnen vom Chassis (16) weg im Wesentlichen parallel versetzt und anschließend relativ zu den Haltearmen (12, 14) verschoben wird.

14. Vorrichtung zum Versorgen wenigstens einer in einer Schiebetür (10) eines Fahrzeugs angeordneten elektrischen Komponente (30) mit elektrischer Energie, wobei die Schiebetür (10) mittels zweier Haltearme (12, 14) an einem Chassis (16) gehalten ist und der eine Haltearm (14, 12) einen Leitungsabschnitt zum Übertragen einer, insbesondere mit Steuersignalen beaufschlagten, elektrischen Versorgungsspannung und der andere Haltearm (12, 14) einen Masse-Leitungsabschnitt bildet.
